(19) Europäisches Patentamt
European Patent Office
Office européen des brevets

(11) **EP 2 365 672 A1**

(12) **EUROPEAN PATENT APPLICATION**

(43) Date of publication:
**14.09.2011 Bulletin 2011/37**

(51) Int Cl.:
*H04L 29/06* *(2006.01)*  *H04B 5/02* *(2006.01)*

(21) Application number: **10305210.6**

(22) Date of filing: **01.03.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA ME RS**

(71) Applicant: **Gemalto SA**
**92190 Meudon (FR)**

(72) Inventors:
- **Caruana, Jean-Paul**
  **13009, MARSEILLE (FR)**
- **Rhelimi, Alain**
  **13600, CEYRESTE (FR)**

(54) **Method of selecting a protocol**

(57) The invention is a method for selecting a protocol, a first contactless device being able to communicate through first and second contactless protocols by generating a modulated magnetic field set to a first power level, respectively to a second power level. The modulated magnetic field generation is started immediately at the beginning of the polling sequence. The first power level is lower than 1,5 A/m. The method comprises the steps of:

- starting a polling sequence by using the first protocol. The polling sequence comprises at least one wake-up command.
- checking if a response has been received from a second contactless device for a wake-up command during a preset period.
- switching to the second protocol in case of unsuccessful polling sequence.

FIG. 2

# Description

## (Field of the invention)

The present invention relates to methods of selecting a protocol. It relates particularly to methods for selecting a contactless protocol intended to be used for the communication between several contactless devices.

## (Prior art)

The NFC (Near Field Communication) technology is based on the exchanging of data via a modulated magnetic field. A NFC reader has an antenna which is able to modulate the magnetic field and to provide energy to NFC devices. The NFC reader is usually named a PCD (Proximity Coupling Device). The NFC device may be a PICC (Proximity Integrated Circuit Card or Proximity Card) or may embed components which act as logical PICC. The PICC and the PCD communicate thanks to an inductive coupling in a field frequency equal to 13.56 MHz. In particular, the ISO14443, ISO/IEC21481 and ISO18092 standards provide modulation technologies and communication protocols which may be used in NFC domain.

The reader may set the modulated magnetic field to a plurality of power levels. In particular, according to ISO/IEC 14443 standard, the PICC and the PCD communicate in a modulated magnetic field having a power level upper or equal to 1.5 Ampere/meter. PCD shall provide at least 1.5 A/m, and PICC work since 1.5 A/m.

A passive device is unable to generate a modulated magnetic field. The passive device uses the unmodulated magnetic field produced by another device. An active device is able to generate its own modulated magnetic field.

The Very High Data Rate (VHDR) protocol is defined by the TF2N653.

When devices are in active mode (powered by battery) the VHDR protocol allows a PICC (collecting a modulated magnetic field) and a PCD (generating a modulated magnetic field) to communicate in a modulated magnetic field having a power level lower than the minimal power level defined for the ISO14443 standard.

There is a need for allowing a PCD to communicate both with devices compliant with two distinct contactless protocols that rely on two distinct power level values.

## (Summary of the Invention)

An object of the invention is to solve the above mentioned technical problem.

The object of the present invention is a method of selecting a protocol. A first contactless device is capable of communicating through first and second contactless protocols by generating a modulated magnetic field. The magnetic field is set to a first power level for the first protocol. The magnetic field is set to a second power level for the second protocol. The first power level is lower than 1,5 A/m. The method comprises the steps of:

- starting a polling sequence by using the first protocol, said polling sequence comprising at least one wake-up command. The generation of the modulated magnetic field is started immediately at the beginning of the polling sequence, without listening phase.
- checking if a response has been received from a second contactless device for at least one wake-up command during a preset period.
- switching to the second protocol in case of unsuccessful polling sequence.

Thus the first protocol is used in case of successful polling sequence.

In a preferred embodiment, the second protocol may comply with the ISO14443 standard.

Advantageously, said first and second devices may work in active mode and may have selected the first protocol for an applicative communication. Said first and second devices may switch in a low power mode when no data is exchanged between the contactless devices.

Advantageously, said first contactless device may stop the generation of the modulated magnetic field during the preset period which follows a wake-up command.

In a preferred embodiment, said first contactless device may stay in listening mode after the preset period until said first device emits another wake-up command or said first device detects a wake-up command emitted by said second device.

Advantageously, the duration between the starting of the modulated magnetic field generation and the beginning of the first wake-up command emission may be equal to or lower than 0,5 $\mu$s.

In one embodiment, the polling sequence may comprise several wake-up commands, and the time between two consecutive wake-up commands may be randomly generated.

Advantageously, said first device may be a contactless reader and said second device may be a contactless card.

In one embodiment, said second device may comprise an application which is reachable through the second protocol only. The method may comprise the further steps of:

- in case of success of the polling sequence with the first protocol, trying to select said application,
- in case of unsuccessful selection of the application, switching to the second protocol and trying to select said application.

Another object of the invention is a contactless device comprising a communication means able to provide a modulated magnetic field which can be set to first and second power levels. Said contactless device is capable of communicating through first and second contactless protocols by using said first power level, respectively said second power level. The contactless device comprises a first means capable of managing a polling sequence that comprises at least one wake-up command. The contactless device comprises a second means capable of checking if a response has been received for at least one wake-up command during a preset period. The communication means is capable of starting the modulated magnetic field generation with the first power level immediately at the beginning of the polling sequence, without listening phase. The first power level is lower than 1,5 A/m. The contactless device comprises a third means capable of switching to the second protocol in case of unsuccessful polling sequence.

In a preferred embodiment, the second protocol may comply with the ISO14443 standard.

Advantageously, the first power level may be equal to 0,4 A/m or 0,5 A/m.

In one embodiment, the communication means may be capable of stopping the generation of the modulated magnetic field during the preset period which follows at least one wake-up command.

Advantageously, the first means may be capable of generating two consecutive wake-up commands which are separated by a duration which is randomly generated.

In one embodiment, the contactless device may comprise a selecting means capable of trying to select an application which is embedded in another contactless device. The application may be reachable through the second protocol only. Said third means may be capable of switching to the second protocol in case of unsuccessful selection of said application.

**(Brief description of the drawings)**

Other characteristics and advantages of the present invention will emerge more clearly from a reading of the following description of a number of preferred embodiments of the invention with reference to the corresponding accompanying drawings in which:

- Figure 1 depicts schematically an example of communication exchanges between a contactless card and a contactless reader according to the invention;
- Figure 2 is a diagram showing a first example of a polling sequence leading to the selection of the ISO14443 protocol according to the invention;
- Figure 3 is a diagram showing a second example of a polling sequence leading to the selection of the VHDR protocol between a PCD and an active PICC according to the invention; and
- Figure 4 is a diagram showing a third example of a polling sequence leading to the selection of the VHDR protocol between a PCD and a PICC able to operate in active mode according to the invention.

**(Detailed description of the preferred embodiments)**

The invention may apply to any types of contactless device able to provide a modulated magnetic field. In particular, the invention may apply to devices complying with the Very High Data Rate (VHDR) protocol as defined by the TF2N653 document. The invention may also apply to contactless devices complying with the ISO/IEC14443, ISO/IEC21481 or ISO/IEC 18092. The invention may apply to contactless devices in many domains, like e-Passport, e-Health, e-Access, e-payment and so on.

The invention is a method allowing the communication between two active VHDR devices modulating low power magnetic fields and exposing better performances (operational distance, data rates, and power consumption) than communication between passive mode VHDR devices.

The contactless device that provides a modulated magnetic field may be a contactless reader or any device able to act as a contactless reader. For example this contactless device may be a portable device like a mobile phone or an Electronic Funds Transfer Terminal for payment. The reader may also be a fixed device like an access reader or a border Control for e-passport.

The invention relies on the fact that the first polling sequence is performed in a very short time and with a power level lower than a predefined threshold. The predefined threshold depends on the legacy contactless standards. Moreover the invention does not require any listening phase before starting the modulated magnetic field at the beginning of the polling sequence. The contactless device starts the generation of the modulated magnetic field without checking if a modulated magnetic field is already present.

An advantage of the invention is to allow a PCD to select the protocol which requires the lowest power level. Thus the energy used for the subsequent contactless communication is low. The power consumption of the PCD is saved since there are no needs to maintain the unmodulated magnetic field when there is no data to exchange. The PCD battery is saved too. This power saving is particularly useful for portable PCD which have limited energy resources.

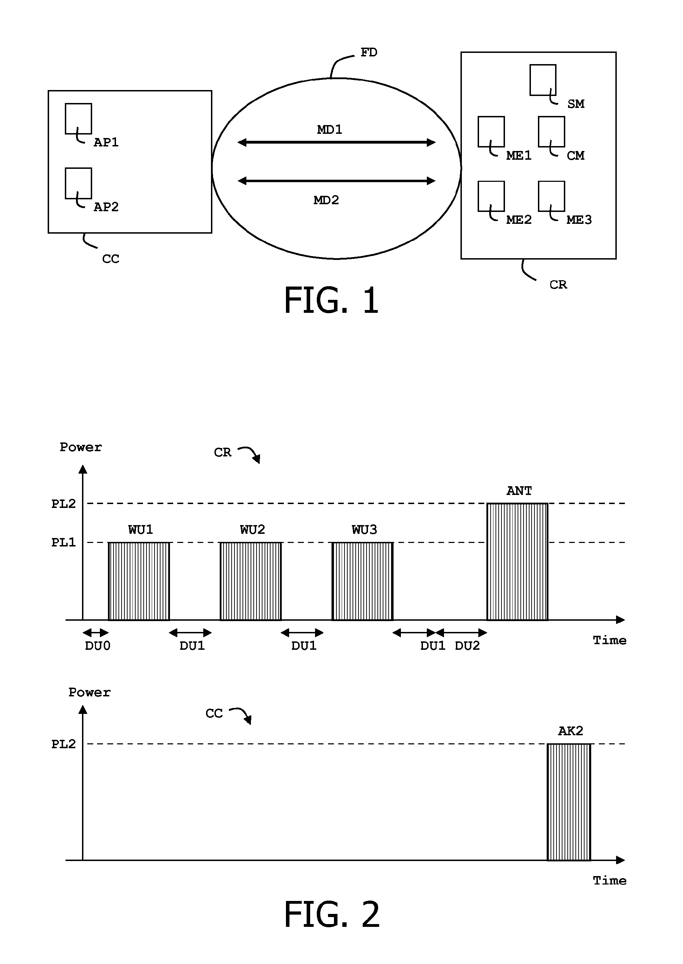

**Figure 1** shows an example of communication exchanges between a contactless card CC and a contactless reader CR. According to one embodiment of the invention, the reader device CR is a mobile phone.

The contactless card CC comprises two applications AP1 and AP2. For example, each of these applications may be related to Identity domain (e.g. Passport), to Health domain, to Security domain (e.g. Access management), or banking domain (e.g. wallet or payment token).

The device CR has contactless reader features and comprises an antenna (not drawn) and a contactless controller (not drawn). The device CR comprises a communication means CM which is capable of generating a modulated magnetic field FD. The modulated magnetic field FD may be set to at least first and second power levels. The device CR is able to communicate through a first contactless protocol MD1 by generating a modulated magnetic field FD set to the first power level. The device CR is able to communicate through a second contactless protocol MD2 by generating a modulated magnetic field FD set to the second power level. In a preferred embodiment, the first protocol is the VHDR protocol and the first power level is greater than 0,3 A/m, the second protocol complies with the ISO14443 standard and the second power level is greater than 1,5 A/m. The communication means CM is able to start the generation of the modulated magnetic field FD set to the first power level immediately at the beginning of the polling sequence. The device CR comprises a means ME1 which is capable of managing a polling sequence comprising at least one wake-up command. The polling sequence may comprise one or several wake-up commands depending on the received response related to emitted wake-up commands. The device CR comprises a means ME2 which is capable of checking if a response has been received for at least one wake-up command during a preset period. The device CR comprises a means ME3 which is capable of switching to said second protocol MD2 in case of unsuccessful polling sequence. The device CR comprises a means SM which is capable of trying to select each of the applications AP1 and AP2.

**Figure 2** shows an example of polling sequence leading to the selection of the ISO14443 protocol according to the invention.

In the example of Figure 2, the first protocol MD1 is the VHDR protocol, the second protocol MD2 is the ISO/IEC 14443 type A and the contactless device CC complies with ISO/IEC 14443 type A requirements. In accordance with the ISO/IEC 14443 standard, the device CC is unable to detect a modulated magnetic field with a power level lower than 1,5 A/m.

When the PCD CR decides to scan if another contactless device is present in the vicinity of the PCD, the device CR starts a first polling sequence with the first protocol MD1. The polling sequence is carried out by using a modulated magnetic field FD which is set to the first power level PL1. In one embodiment, the power level PL1 is greater than 0,3 A/m. Alternatively and preferably, the power level PL1 may also be equal to 0,3 A/m, to 0,5 A/m, to 0,6 A/m or any value in the range [0,3 A/m to 1.5 A/m[.

The polling sequence directly starts with the generation of the modulated magnetic field FD. There is no listening phase before the starting of the field FD generation. The generation of the field FD is started through a power on. A power ramp up occurs for reaching the targeted power level LP1. This power ramp up is performed in a very short time. (Ramp up duration is less than 0,6 μs) Power ramp up and power ramp down are not drawn on Figure 2. Then the first wake-up command WU1 of the polling sequence is emitted. In a preferred embodiment, the duration DU0 between the power on and the beginning of the wake-up command WU1 is lower than 0,5 μs.

Then the device CR stops the generation of the field FD and starts a listening phase during the duration DU1. The device CR checks if a response to the wake-up command WU1 is received during DU1. The generation of the modulated magnetic field FD is stopped in order to allow an active PICC to send a response to the wake-up command WU1. In the example of Figure 2, no response is received by the device CR. Then the device CR starts again the generation of the field FD at the power level PL1 and sends a second wake-up command WU2. Then the device CR stops the generation of the field FD and starts a listening phase during the duration DU1. In the example of Figure 2, no response is received by the device CR for the second wake-up command WU2.

Then the device CR starts again the generation of the field FD at the power level PL1 and emits a third wake-up command WU3. Then the device CR stops the generation of the field FD and starts a listening phase during the duration DU1. In the example of Figure 2, no response is received by the device CR for the third wake-up command WU3. In that case, the device CR stops the polling sequence at power level LP1. After an additional duration DU2, the device CR starts the generation of the field FD at the power level PL2. The device CR starts the ISO14443 type A anti-collision procedure 5 milliseconds after the end of the power ramp up. The device CR emits a burst ANT. The duration DU2 may have a preset value or be randomly generated.

In response to the burst ANT, the device CC sends a response AK2 allowing the device CR to detect the presence of the device CC. Thus both devices CR and CC are now able to communicate by using the ISO/IEC 14443 type A protocol.

Advantageously, in case of unsuccessful type A anti-collision procedure, the device CR may perform another anti-collision procedure according to ISO/IEC 14443 type B standard.

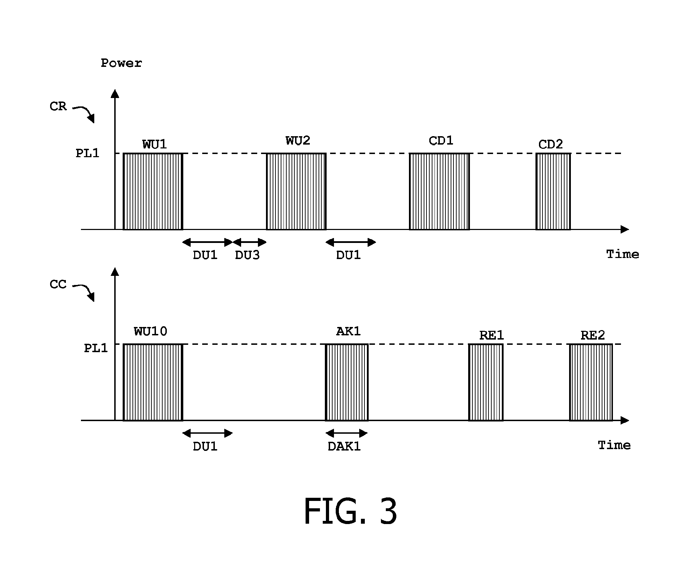

**Figure 3** shows an example of a polling sequence leading to the selection of the VHDR protocol between a PCD and an active PICC according to the invention.

In the example of Figure 3, the first protocol MD1 is the VHDR protocol, and the contactless device CC complies with VHDR requirements. The device CC is an active device which is able to generate its own modulated magnetic field.

When the PCD CR decides to scan if another contactless device is present in the vicinity of the PCD, the device CR starts a first polling sequence. The polling sequence is performed by using a modulated magnetic field FD which is set to the first power level PL1. In one embodiment, the power level PL1 is equal to 0,5 A/m.

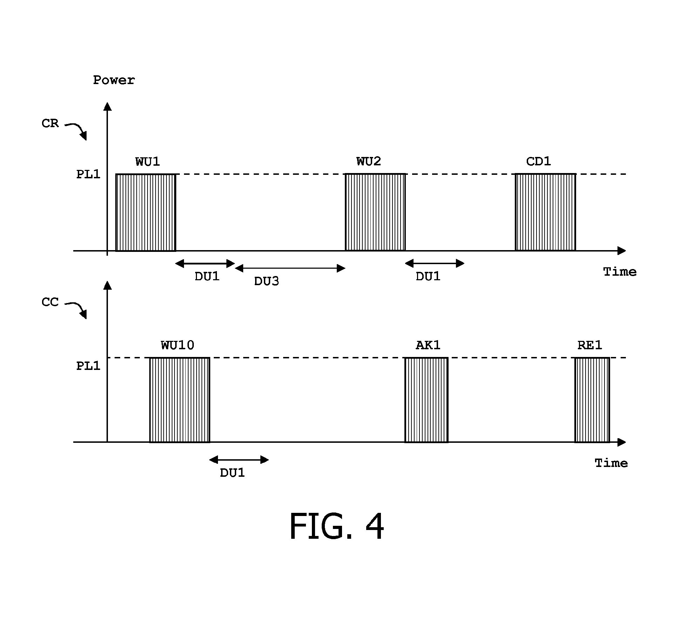

The polling sequence immediately starts with the generation of the modulated magnetic field FD via a power on. Note that power ramp up and power ramp down are drawn neither at Figure 3 nor at Figure 4. Then a first wake-up command WU1 of the polling sequence is emitted. The device CR stops the generation of the field FD and starts a listening phase during the duration DU1.

The device CC is a PICC running the active mode which may also emit a polling sequence at the power level LP1. Thus CC may start its own polling sequence with similar technical value since the device CC complies with VHDR standard. The device CC starts the generation of its own modulated magnetic field and emits its first wake-up command WU10.

In the example of Figure 3, the two devices CR and CC simultaneously start their polling sequence. This scenario is due to coincidence and should rarely happen. In this case, the two wake-up commands WU1 and WU10 simultaneously occur. There is no response to these first wake-up commands during the duration DU1 since the emissions are concomitant.

Then the device CR emits a second wake-up command WU2 after an additional duration DU3. This duration DU3 may be may be randomly generated in order to quickly desynchronize the two devices for having a higher probability to get a device in pooling mode when the other device is in listening mode (a.k.a pure non slotted Aloha protocol). For example, the duration DU3 may be comprised in the range [10 µs to 100µs]. The duration DU3 may be different for each wake-up command of the polling sequence. Advantageously, the value of duration DU3 is selected in order to minimize the risk of collision between two devices that generate a modulated magnetic field. In the example of Figure 3, the device CC is assumed to stay in listening phase after the duration DU1 corresponding to its wake-up command WU10 in order to receive the wake-up response initiating the pairing. Moreover the device CC is assumed to be able to send its second wake-up command after a duration higher than DU3. Alternatively, the device CC may be supposed to end its polling sequence after the wake-up command WU10.

In the example of Figure 3, the device CC detects the wake-up command WU2 and emits a corresponding response AK1. The device CR detects the response AK1 and validates the use of the protocol MD1. Both device CR and CC are now able to communicate through the protocol MD1. The protocol MD1 has been selected by both devices CR and CC.

Advantageously, the duration DAK1 of the response AK1 may be comprised in the range [10 µs to 20 µs] depending on the data rate.

Since the protocol MD1 session is established, the device CR may send a command CD1 and the device CC may send a corresponding response RE1. The session may go on with as many couples command/response as needed via the selected protocol MD1 for applicative communication purpose.

In the legacy implementation we distinguish both devices CR and CC corresponding respectively to the PCD and the PICC. In the active mode both devices are totally symmetrical and there is no longer a PCD and a PICC but both devices play symmetrically the same role.

In a preferred embodiment, the maximal connection time could be evaluated as follow.

We assume two devices CR and CC which are totally equivalent and working in a symmetrical manner. Both devices may send a wake-up command during a duration DW1 and may listen during a duration DL1. Preferably the duration DL1 is a random time. The listening device CR or CC will not send a wake-up command if the reception of an incoming wake-up command is right assuming there is no RF carrier prior the sending of the wake-up command. The duration DW1 is constant and integrates the time required to send the wake-up command and the time to switch the device in receiver mode. K is the number of DW1 slot time. The duration DU3 is greater than DU1 and less than K x DW1.

The average maximal time TM which is required for synchronizing both devices is equal to:

$$TM = 6 \times K \times DW1.$$

**Figure 4** shows another example of a polling sequence leading to the selection of the VHDR protocol between a PCD and a PICC running in active mode according to the invention.

In the example of Figure 4, the first protocol MD1 is the VHDR protocol, and the contactless device CC complies with VHDR requirements.

When the PCD CR decides to scan if another contactless device is present in the vicinity of the PCD, the device CR starts a first polling sequence. The polling sequence is performed by using a modulated magnetic field FD which is set to the first power level PL1.

The polling sequence directly starts with the generation of the modulated magnetic field FD via a power on. Then a first wake-up command WU1 of the polling sequence is emitted by the device CR. The device CR stops the generation of the field FD and starts a listening phase during the duration DU1.

The device CC is an active PICC which may also emit a polling sequence at the power level LP1. Thus CC may start its own polling sequence with similar technical value since the device CC complies with VHDR standard. The device CC starts the generation of its own modulated magnetic field and emits its first wake-up command WU10.

In the example of Figure 4, the two devices CR and CC start their polling sequence with a light time lag. Thus a part of the wake-up command WU10 is detected by the device CR during the listening duration DU1 corresponding to the wake-up command WU1. The signal detected by the device CR does not match with a response as expected according to the MD1 protocol. Thus the device CR emits a second wake-up command WU2, stops the generation of the field FD and starts another listening phase during the duration DU1. In the example of Figure 4 the device CC emits a response AK1 corresponding to the second wake-up command WU2. The device CR detects the response AK1 and validates the use of the protocol MD1. Both device CR and CC are now able to communicate through the protocol MD1.

When the device CR sends a command CD1, the device CC sends the corresponding response RE1. The session may go on with as many couples command/response via the selected protocol MD1.

Preferably, the maximum number of wake-up commands where the modulated magnetic field generation is stopped may be set in the range [1 to 10] in order not to add an abusive overhead when addressing legacy contactless equipment.

In another embodiment, the device CC may be a contactless device used for accessing a subway. The access to the subway is controlled by a dedicated transport application AP2. The device CC may be compliant with both first protocol MD1 and second protocol MD2. The device CC may comprise a Health application AP1 and the Transport application AP2. Moreover, the application AP1 may be reachable through the first protocol MD1 only and the application AP2 may be reachable through the second protocol MD2 only. According to the invention, the device CR will detect the presence of the device CC and select the first protocol MD1. Then the device CR will try to select the transport application AP2. The selection will fail since the application AP2 may be reached through the second protocol MD2 only. Then the device CR may switch to the second protocol MD2 and start a new anti-collision procedure in protocol MD2. The device CR will detect the presence of the device CC and select the second protocol MD2. Then the device CR will try to select the transport application AP2 through protocol MD2. The selection will succeed. Thus the access to the subway may be provided to the user of the device CC.

The fact to unselect the current protocol in response to the failing of an application selection may be implemented for a series of protocols. For instance if the transport application is reachable through the ISO14443 type B protocol, the device CR may successively select the VHDR protocol as first protocol, the ISO14443 type A protocol as second protocol and the ISO14443 type B protocol as third protocol.

When the first protocol MD1 is the VHDR protocol and the second protocol MD2 is the ISO14443 protocol, the VHDR polling sequence may be seen as a preliminary phase before a legacy ISO14443 anti-collision step. The VHDR polling sequence is performed with a low power level and in a very short time compared to the ISO14443 anti-collision step. The VHDR polling sequence may be performed in a few tens microseconds when legacy ISO14443 anti-collision step requires a few tens milliseconds.

An advantage of the invention is to allow the selection of the protocol which consumes the least energy power.

Thanks to the invention, a PCD may manage the VHDR protocol and keep the compliancy with the legacy ISO 14443 standard.

An advantage of the invention is to operate in a symmetrical manner after the detection of the VHDR active mode. The behavior of legacy contactless devices are based on a master (the PCD) sending commands and a slave responding to commands. After detection of the active mode, both devices may send commands or send responses, consequently the concept of command/response pair becomes meaningless. Any devices may initiate the data transfer without to be prompted by the other device. The above features allow avoiding a periodic communication exchange to maintain the communication session open (keep alive principle) or give the opportunity for the slave to proactively send data to the master in running in passive mode. During slot time where no data is exchanged, both devices may switch in low power mode (no magnetic field generation) listening for modulated magnetic field from the other device.

The invention allows the following use case. Two symmetrical devices may work according to the VHDR active mode. The VHDR active mode is assumed to be detected by both devices willing to exchange asynchronously application data. Both devices may implement over their MAC (Medium Access Control) layer a link layer according to the standard ISO 13239 or the SHDLC protocol according to the ETSI TS 102.613. The device CR sends a frame to the device CC after listening that no frame sending is on going from the device CC. If there is a magnetic bus contention then the frame is lost and repeated later on. The device CR waits for two FDT (Frame Delay Time) before to send another frame giving a chance for the device CC to send its frame between the slot time FDT to 2 x FDT. Several frames may be sent from the device CR to the device CC until the sliding window limit (HDLC principle) with a gap time about 2 x FDT between each frame. If the data traffic is balanced between both devices then each device sends alternatively a frame having a gap time equals to FDT.

Another possible implementation is described here after. The device CR sends a frame to the device CC after listening that no frame sending is on going from the device CC. If there is a magnetic bus contention then the frame is lost and repeated later on. The device CR waits for one FDT (Frame Delay Time), waiting for a frame from the device CC. The frame can be an acknowledgement of the received frame or a data attached to an acknowledgement of the received frame (piggy packing principle). If the acknowledgement is not well received or negative then the frame from CR is repeated after a random time (magnetic bus contention resolution).

## Claims

1. A **method** of selecting a protocol, a first contactless device (CR) being able to communicate through first and second contactless protocols (MD1, MD2) by generating a modulated magnetic field (FD) set to a first power level (PL1), respectively to a second power level (PL2), said method comprising the steps of:

   a) starting a polling sequence by using the first protocol (MD1), said polling sequence comprising at least one wake-up command (WU1),
   b) checking if a response (AK1) has been received from a second contactless device (CC) for at least one wake-up command (WU1) during a preset period (DU1), **characterized in that** the modulated magnetic field (FD) generation is started immediately at the beginning of the polling sequence, without listening phase, **in that** the first power level (PL1) is lower than 1,5 A/m and **in that** said method comprises the further step of:
   c) switching to the second protocol (MD2) in case of unsuccessful polling sequence.

2. A method according to claim 1, wherein said second protocol (MD2) complies with the ISO14443 standard.

3. A method according to one of claims 1 to 2, wherein said first and second devices (CR, CC) work in active mode and have selected the first protocol (MD1) for an applicative communication and wherein first and second devices (CR, CC) switch in a low power mode when no data is exchanged.

4. A method according to one of claims 1 to 3, wherein said first contactless device (CR) stops the generation of the modulated magnetic field (FD) during the preset period (DU1) which follows a wake-up command (WU1) .

5. A method according to one of claims 4, wherein said first contactless device (CR) stays in listening mode after said preset period (DU1) until said first device (CR) emits another wake-up command (WU2) or said first device (CR) detects a wake-up command emitted by said second device (CC).

6. A method according to one of claims 1 to 5, wherein the duration (DU0) between the starting of the generation of the modulated magnetic field (FD) and the beginning of the emission of the first wake-up command (WU1) is equal to or lower than 0,5 $\mu$s.

7. A method according to one of claims 1 to 6, wherein said polling sequence comprises several wake-up commands and wherein the time between two consecutive wake-up commands is randomly generated.

8. A method according to one of claims 1 to 7, wherein said first device (CR) is a contactless reader and said second device (CC) is a contactless card.

9. A method according to one of claims 1 to 7, wherein said second device (CC) comprises an application (AP1) which is reachable through the second protocol (MD2) only, wherein said method comprises the further steps of:

   d) in case of successful polling sequence, trying to select said application (AP1),
   e) in case of unsuccessful selection of said application (AP1), switching to the second protocol (MD2) and trying to select said application (AP1).

10. A **contactless device** (CR), comprising a communication means (CM) able to provide a modulated magnetic field (FD) which can be set to first and second power levels (PL1, PL2), said device (CR) being able to communicate through first and second contactless protocols (MD1, MD2) by using said first power level (PL1), respectively said second power level (PL2), said device (CR) comprising first and second means (ME1, ME2), said first means (ME1) being able to manage a polling sequence comprising at least one wake-up command (WU1), said second means (ME2) being able to check if a response (AK1) has been received for at least one wake-up command (WU1) during a preset period (DU1),
**characterized in that** said communication means (CM) is able to start the modulated magnetic field (FD) generation with the first power level (PL1) immediately at the beginning of the polling sequence, without listening phase, **in that** said first power level (PL1) is lower than 1,5 A/m and **in that** said device (CR) comprises a third means (ME3) able to switch to said second protocol (MD2) in case of unsuccessful polling sequence.

11. A contactless device (CR) according to claim 10, wherein said second protocol (MD2) complies with the ISO14443 standard.

12. A contactless device (CR) according to one of claims 10 to 11, wherein said first power level (PL1) is equal to 0,4 A/m or 0,5 A/m.

13. A contactless device (CR) according to one of claims 10 to 12, wherein said communication means (CM) is able to stop the generation of the modulated magnetic field (FD) during the preset period (DU1) which follows at least one wake-up command (WU1).

**14.** A contactless device (CR) according to one of claims 10 to 13, wherein said first means (ME1) is able to generate two consecutive wake-up commands which are separated by a duration which is randomly generated.

**15.** A contactless device (CR) according to one of claims 10 to 14, wherein said contactless device (CR) comprises a selecting means (SM) able to try to select an application (AP1) which is embedded in another contactless device (CC), said application (AP1) being reachable through the second protocol (MD2) only, and wherein said third means (ME3) is able to switch to the second protocol (MD2) in case of unsuccessful selection of said application (AP1).

FIG. 1

FIG. 2

FIG. 3

FIG. 4

# EUROPEAN SEARCH REPORT

Application Number

EP 10 30 5210

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2006/052055 A1 (ROWSE GRAHAM [GB] ET AL) 9 March 2006 (2006-03-09) * * * * * paragraph [0003] - paragraph [0011] * * paragraph [0014] - paragraph [0015] * * paragraph [0017] * * paragraph [0019] * * paragraph [0020] * ----- | 1-15 | INV. H04L29/06 H04B5/02 |
| Y | Gemalto, Remi Calvet: "Gemalto Receives Two Sesames Awards - "Hardware" with "contactless very high data rate" and "Mobile" with "Massim"" <br><br> 17 November 2009 (2009-11-17), pages 1-2, XP002594089 Retrieved from the Internet: URL:http://www.gemalto.com/php/pr_view.php?id=661 [retrieved on 2010-07-27] * paragraph [Harware] * ----- | 1-15 | |
| A | NITIN VAIDYA ET AL: "RFID-based networks: exploiting diversity and redundancy" ACM SIGMOBILE MOBILE COMPUTING AND COMMUNICATIONS REVIEW, ACM, NEW YORK, NY, US, vol. 12, no. 1, 1 January 2009 (2009-01-01), pages 2-14, XP002549930 * page 3, last paragraph * * page 7, left-hand column, last paragraph - right-hand column, last paragraph * ----- -/-- | 1,10 | TECHNICAL FIELDS SEARCHED (IPC) <br><br> H04L H04B |

The present search report has been drawn up for all claims

| Place of search | Date of completion of the search | Examiner |
|---|---|---|
| Munich | 28 July 2010 | Huber, Oliver |

EPO FORM 1503 03.82 (P04C01)

Europäisches
Patentamt

European
Patent Office

Office européen
des brevets

# EUROPEAN SEARCH REPORT

**Application Number**

EP 10 30 5210

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 01/50407 A1 (SAMSYS INC [CA]; HORWITZ CLIFFORD A [CA]; DAVIDSON WILLIAM E [US]) 12 July 2001 (2001-07-12) * page 17, line 21 - line 31 * * page 7, line 23 - page 8, line 20 * ----- | 1,10 | |

| | | | TECHNICAL FIELDS SEARCHED (IPC) |
|---|---|---|---|
| | | | |

The present search report has been drawn up for all claims

| Place of search | Date of completion of the search | Examiner |
|---|---|---|
| Munich | 28 July 2010 | Huber, Oliver |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 10 30 5210

This annex lists the patent family members relating to the patent documents cited in the above-mentioned European search report.
The members are as contained in the European Patent Office EDP file on
The European Patent Office is in no way liable for these particulars which are merely given for the purpose of information.

28-07-2010

| Patent document cited in search report | | Publication date | Patent family member(s) | | Publication date |
|---|---|---|---|---|---|
| US 2006052055 | A1 | 09-03-2006 | AT | 445852 T | 15-10-2009 |
| | | | BR | PI0514967 A | 01-07-2008 |
| | | | CA | 2579181 A1 | 16-03-2006 |
| | | | CN | 101010887 A | 01-08-2007 |
| | | | EP | 1787139 A1 | 23-05-2007 |
| | | | EP | 2065728 A1 | 03-06-2009 |
| | | | WO | 2006027646 A1 | 16-03-2006 |
| | | | JP | 2008510403 T | 03-04-2008 |
| | | | KR | 20070043031 A | 24-04-2007 |
| | | | KR | 20090026812 A | 13-03-2009 |
| | | | US | 2010026454 A1 | 04-02-2010 |
| WO 0150407 | A1 | 12-07-2001 | AT | 321309 T | 15-04-2006 |
| | | | AU | 2659501 A | 16-07-2001 |
| | | | CA | 2395847 A1 | 12-07-2001 |
| | | | DE | 60118153 T2 | 08-03-2007 |
| | | | EP | 1244997 A1 | 02-10-2002 |
| | | | US | 6617962 B1 | 09-09-2003 |
| | | | US | 2004085191 A1 | 06-05-2004 |

EPO FORM P0459

For more details about this annex : see Official Journal of the European Patent Office, No. 12/82